# EUROPEAN PATENT SPECIFICATION

(11) **EP 3 431 900 B1**
(45) Date of publication and mention of the grant of the patent: **23.12.2020**
(21) Application number: 17182356.0
(22) Date of filing: 20.07.2017
(51) Int. Cl.: F24S 50/20, F24S 30/425, F24S 40/20

(54) **APPARATUS AND METHOD FOR MOUNTING A SOLAR ENERGY DEVICE**
VORRICHTUNG UND VERFAHREN ZUR MONTAGE EINER SOLARENERGIEVORRICHTUNG
APPAREIL ET PROCÉDÉ DE MONTAGE D'UN DISPOSITIF D'ÉNERGIE SOLAIRE

(43) Date of publication of application: 23.01.2019
(73) Proprietor: Vestel Elektronik Sanayi ve Ticaret A.S., 45030 Manisa (TR)
(72) Inventor: ÜNVER,, Burak, 45030 Manisa (TR); YALIN,, Nevzat, 45030 Manisa (TR)
(74) Representative: Flint, Adam

(56) References cited:
- WO-A1-2012/104873
- CH-A2- 711 729
- CH-A5- 653 464
- IT-A1- CT20 090 011
- JP-A- S61 195 244
- DATABASE WPI Section PQ, Week 201272 Thomson Scientific, London, GB; Class Q74, AN 2012-N36518 XP002777095, -& TW 201 142 226 A (APOLLO NEW ENERGY CORP) 1 December 2011 (2011-12-01)

## Description

### Technical Field

The present disclosure relates to an apparatus for mounting a solar energy device and a method of operating a solar energy device mounting apparatus.

### Background

Solar energy devices, including for example solar panels and the like, are of growing importance. Solar farms are used for example to generate electric power or heat by using a large number of solar panels. Some apparatus for supporting the solar panels enable the solar panel to be repositioned, for example to track the (apparent) movement of the Sun during the day.

JP S61 195244 A discloses, to enable a solar energy utilising device to follow the diurnal motion, a method wherein a light receiving member is provided on the west side and east side supports via an east/west direction swinging mechanism, while the west side support is supported by a movable member in a liquid tank and a leak valve is provided at an intermediate portion on the liquid moving passage in the liquid tank.

### Summary

According to a first aspect disclosed herein, there is provided apparatus for mounting a solar energy device, the apparatus comprising:
a support on or in which a solar energy device may be mounted, the support being movable so as to be able to track movement of the Sun; and
a piston connected to the support, the piston being drivable to a first position to move the support to a first orientation;
   the arrangement being such that the piston can be released to move under gravity to a second position to allow the support to move to a second orientation;
wherein the piston is mounted in a cylinder which is arranged to receive a drive fluid to drive the piston to the first position; and
wherein the cylinder comprises an outlet valve which can be selectively opened and closed, the arrangement being such that opening of the outlet valve allows drive fluid to escape from the cylinder to release the piston to move under gravity to the second position to allow the support to move to the second orientation; and
wherein the support comprises at least one fluid outlet which is in fluid communication with the outlet valve of the cylinder and arranged such that fluid escaping from the cylinder passes out of the fluid outlet and over the solar energy device mounted in or on the support in use.

In an example, the apparatus comprises a pump or compressor arranged to provide the drive fluid to the cylinder to drive the piston to the first position

According to a second aspect disclosed herein, there is provided a method of operating a solar energy device mounting apparatus, the apparatus comprising a support on or in which the solar energy device is mounted, the support being movable so as to be able to track movement of the Sun, the method comprising:
driving a piston connected to the support to a first position to move the support to a first orientation; and
releasing the piston to move under gravity to a second position to allow the support to move to a second orientation;
wherein the support is moved to the first orientation for sunrise and the piston is released to allow the support to move gradually over time to the second orientation for sunset
wherein the piston is mounted in a cylinder, and the driving the piston to the first position comprises pumping a drive fluid to the cylinder to drive the piston to the first position;
wherein the releasing the piston comprises opening an outlet valve of the cylinder to allow drive fluid to escape from the cylinder to release the piston to move under gravity to the second position to allow the support to move to the second orientation; and
wherein the support comprises at least one fluid outlet which is in fluid communication with the outlet valve of the cylinder such that fluid escaping from the cylinder passes out of the fluid outlet and over a solar energy device mounted in or on the support in use.

### Brief Description of the Drawings

To assist understanding of the present disclosure and to show how embodiments may be put into effect, reference is made by way of example to the accompanying drawings in which:
Figure 1 shows schematically an example of an apparatus for mounting a solar energy device; and

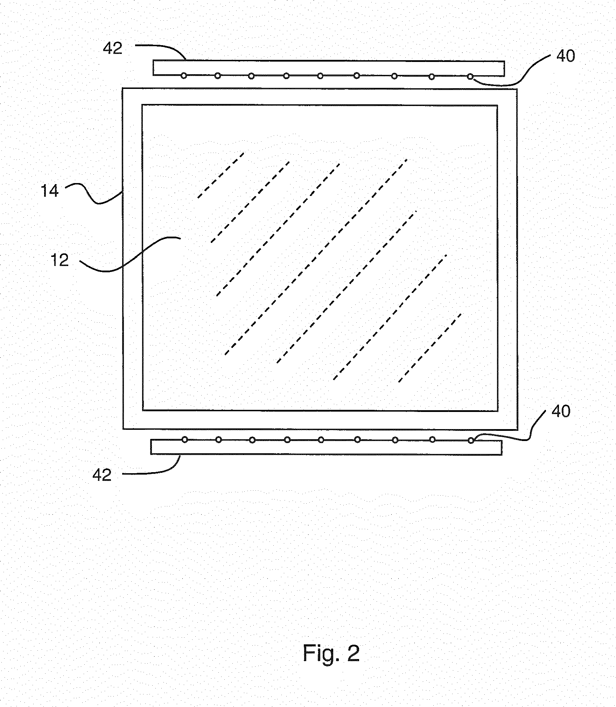

Figure 2 shows schematically a view from the front of a solar energy device mounted in or on a support.

### Detailed Description

A solar power system typically employs a number of solar energy devices, which convert incident solar energy into another form of energy, such as electrical energy or thermal energy. A solar energy device may be in the form of for example a solar panel, which has a number of solar cells, which generate electrical power from incident solar energy. A solar cell is an electrical device that converts the energy of light into electricity. A solar cell may be for example a photovoltaic device which is a semiconductor device that converts light energy directly into electricity by the photovoltaic effect. As an alternative, the solar energy device may be in the form of "concentrators", which concentrate the solar energy into a small area. The heat energy may be used directly or may be used to drive for example a heat engine which in turn is connected to an electrical power generator for producing electrical energy.

In some solar power systems, the solar energy device is moved or repositioned over time so as to at least partially track the (apparent) movement of the Sun during the day so as to maximise the amount of solar energy that is incident on the solar energy device during the day. For maximum efficiency, the angle of incidence on the solar energy device is minimised. That is, the light-receiving surface of the solar energy device is preferably maintained at or as close to 90° to the direction of the Sun as practical. Various different arrangements for moving the solar energy device are known. However, these are often inefficient.

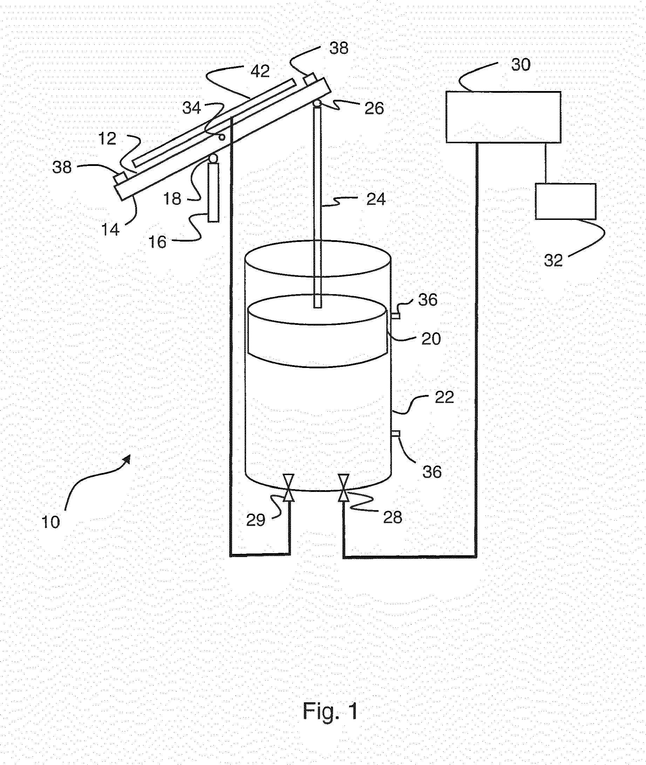

Referring to Figure 1, there is shown an example of apparatus 10 for mounting a solar energy device 12. The solar energy device 12 may be for example a solar panel, which has a number of solar cells, which generate electrical power from incident solar energy. As another example, the solar energy device 12 may be in the form of one or more concentrators, which concentrate the incident solar energy into a small area. The heat energy may then be used directly or may be used for example to drive a heat engine which in turn is connected to a power generator for producing electrical energy. The solar energy device 12 is in the form of a panel which is mounted in or on a support 14. The support 14 may be in the form of a frame, a bracket or a plate or the like.

The support 14 is movable so as to be able to track the (apparent) movement of the Sun during the day. Figure 1 shows schematically a mount 16 to which the support 14 is pivotally connected. The mount 16 may include a ball joint or other articulated connection 18 to allow the orientation of the support 14 and therefore the solar energy device 12 to be adjusted so that the solar energy device 12 tracks the Sun during the day as the Sun moves.

A piston 20 is movable in a cylinder 22. The piston 20 has a connecting rod 24 which is pivotally connected by a ball joint or articulated mount 26 at its free end to the solar energy device support 14. The piston 20 is connected to the support 14 at a location on the support 14 such that moving up and down of the piston 20 within the cylinder 22 causes the support 14 to pivot on the mount 16 and therefore change the orientation of the support 14 and solar energy device 12. In particular, in this example, when the piston 20 is towards the top of the cylinder 22, the solar energy device is oriented or angled so as to face the Sun in the morning, i.e. at the time of sunrise. Conversely, when the piston 20 is lowermost in the cylinder 22, the solar energy device 12 is at a second orientation or inclination at which it generally faces the Sun in the evening, i.e. at sunset. As is well known, the efficiency of a solar energy device is maximised when the planar solar energy solar device is perpendicular to the incoming sunlight. In this example, therefore, the joint 26 which connects the connecting rod 24 of the piston 20 to the support 14 is located at or towards the edge of the support 14 that is intended to be uppermost at sunrise.

A pump or compressor 30 is arranged to pump or compress a fluid via an inlet valve 28 to the cylinder 22 below the piston 20. Accordingly, when a fluid is pumped or compressed through the inlet valve 28, the piston 20 is driven upwards. Operation of the pump 30 may be controlled by a controller 32 which may be or include a processor and which may be for example a microcontroller or the like which is associated with the apparatus 10. The controller 32 may be provided as part of the apparatus 10 or located physically nearby to the apparatus 10. The controller 32 may control the operation of a number of apparatus 10, which may be provided in the form of a solar farm. The pump or compressor 30 and/or the controller 32 may be powered by electricity generated by the solar energy device 12 and/or from some external power source.

In order for the solar energy device 12 and support 14 to move to the second orientation or inclination during the day as the Sun moves, the cylinder 22 has an outlet valve 29. To allow the solar energy device 12 and support 14 to move to the second orientation, the outlet value 29 is opened to allow fluid to escape the cylinder 22. The piston 20 can therefore drop under gravity. This dropping movement of the piston 20 when the outlet value 29 is opened may occur because of the weight of the piston 20 alone. Alternatively or additionally, the mount 16 for the support 14 may be connected to the support 14 at a location that that is away from the centre of mass 34 of the combination of the solar energy device 12 and support 14. Moreover, that location for the connection of the mount 16 to the support 14 is on the other side of the centre of mass 34 from the connection of the connecting rod 24 of the piston 20 to the support 14. In this way, when fluid is allowed to escape the cylinder 22 through the outlet valve 29, the weight of the support 14 and solar energy device 12 tend to drive the piston 20 downwards. The opening and closing of the inlet and outlet valves 28, 29 may be controlled by the controller 32. The outlet valve 29 may be controllably opened such that fluid escapes from the cylinder 22 at a rate that corresponds to the desired movement of the solar energy device 12 and support 14 during the day, that is, so that the solar energy device 12 moves progressively to track movement of the Sun during the day.

In use, therefore, in this example the piston 20 need only be driven once, for a short period, to drive the solar energy device 12 to its first orientation, for sunrise. After that, the outlet valve 29 can be opened and the piston 20 falls under gravity, requiring no further power to drive the piston 20 to move the solar energy device 12 from its first orientation to its second orientation. This helps save power consumption compared to for example known apparatus in which movement of the solar energy device is "actively" driven whenever a movement from one orientation to another is required.

In this example, the cylinder 22 has two switches 36. One switch 36 is located towards the upper end of the desired limit of travel of the piston 20 and the other switch 36 is located at or towards the lower limit of the desired travel of the piston 20. The switches 26 detect when the piston 20 has reached its uppermost or lowermost positions within the cylinder 22. The outputs of the switches 36 may be provided to the controller 32. The controller 32 is connected to the inlet and outlet valves 28, 29 of the cylinder 22 to control the flow of fluid into and out of the cylinder 22 respectively.

In this example, one or more light sensors 38 may be provided in the neighbourhood of the solar energy device 12 to detect the amount of sunlight that is incident on the solar energy device 12. The outputs of the light sensors 38 may be passed to the controller 32, which may control the movement of the solar energy device 12 and support 14 accordingly. Alternatively or additionally, the controller 12 may operate to change the orientation of the solar energy device 12 during the day according to the current location of the solar energy device 12 and the day of the year, i.e. using a solar calendar function. The current location of the solar energy device 12 and the day of the year may be programmed into the controller 32 and/or obtained in real-time, using for example GPS (Global Positioning System) data and/or data obtained via some network connection.

Another problem with other known solar energy devices is that the solar panel or the like which is intended to absorb sunlight often becomes dirty over time. This may be because of for example dust or dirt, leaves, dead insects etc. overlying the solar panel and even becoming attached to the solar panel.

In the example shown, the arrangement is such that fluid exiting the cylinder 22 through the outlet valve 29 is caused to flow across the uppermost surface of the solar energy device 12, i.e. the surface that faces the Sun. This can be achieved in a number of ways.

One example shown schematically in the drawings is for the support 14 to have one or more fluid outlets 40 which are connected to the exit of the outlet valve 29. The one or more fluid outlets 40 may be provided in the frame members of the support 14 which in this case are hollow to receive the fluid exiting the cylinder 22. Alternatively or additionally, the one or more fluid outlets 40 may be provided in one or more separate hollow pipes 42 which are arranged around or adjacent one or more edges of the solar energy device 12.

As fluid exits the cylinder 22 through the outlet valve 29, the fluid is passed to exit the fluid outlets 12 and to flow over the upper surface of the solar energy device 12. This fluid flowing over the upper surface of the solar energy device 12 can therefore remove dust or dirt, leaves, dead insects etc. which have fallen onto the solar panel and which may even have become attached to the solar panel. In one specific arrangement, fluid outlets 40 are provided at least along the edge of the solar energy device 12 that is uppermost during the afternoon. In this way, fluid exiting the fluid outlets 40 will clean the surface of the solar energy device 12 at least during the afternoon. In another specific arrangement, fluid outlets 40 are provided at least along the edge of the solar energy device 12 that is uppermost during the morning. In this way, fluid exiting the fluid outlets 40 will clean the surface of the solar energy device 12 at least during the morning. In yet another specific arrangement, fluid outlets 40 are respectively provided at least along the edge of the solar energy device 12 that is uppermost during the morning and along the edge of the solar energy device 12 that is uppermost during the afternoon. In this way, fluid exiting the fluid outlets 40 will clean the surface of the solar energy device 12 at least during the morning and the afternoon.

The fluid which in this example drives the piston 20 upwards and which is caused to flow over the solar energy device 12 to clean the solar energy device 12 may be a gas or a mixture of gases, including for example air. In that case, the compressor 30 will typically compress the gas or mixture of gases to generate sufficient pressure to drive the piston 20 upwards when needed. As an alternative, the fluid may be a liquid, such as water for example, which is pumped by the pump 30 into the cylinder 22 to drive the piston 20 upwards when needed. In such a case, a liquid catching arrangement, such as a gutter and return flow pipes or the like, may be provided to catch liquid that is caused to flow over the solar energy device 12 and to return the liquid to the liquid source for the pump 30, so as to minimise the need to top up the liquid in the liquid source.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus (10) for mounting a solar energy device (12), the apparatus (10) comprising:
a support (14) on or in which a solar energy device (12) may be mounted, the support (14) being movable so as to be able to track movement of the Sun; and
a piston (20) connected to the support (14), the piston (20) being drivable to a first position to move the support (14) to a first orientation;
the arrangement being such that the piston (20) can be released to move under gravity to a second position to allow the support (14) to move to a second orientation;
wherein the piston (20) is mounted in a cylinder (22) which is arranged to receive a drive fluid to drive the piston (20) to the first position; and
wherein the cylinder (22) comprises an outlet valve (29) which can be selectively opened and closed, the arrangement being such that opening of the outlet valve (29) allows drive fluid to escape from the cylinder (22) to release the piston (20) to move under gravity to the second position to allow the support (14) to move to the second orientation; **characterized in that** the support (14) comprises at least one fluid outlet (40) which is in fluid communication with the outlet valve (29) of the cylinder (22) and arranged such that fluid escaping from the cylinder (22) passes out of the fluid outlet (40) and over the solar energy device (12) mounted in or on the support (14) in use.

2. Apparatus (10) according to claim 1, comprising a pump or compressor (30) arranged to provide the drive fluid to the cylinder (22) to drive the piston (20) to the first position

3. A method of operating a solar energy device mounting apparatus (10), the apparatus (10) comprising a support (14) on or in which the solar energy device (12) is mounted, the support (14) being movable so as to be able to track movement of the Sun, the method comprising:
driving a piston (20) connected to the support (14) to a first position to move the support (14) to a first orientation; and
releasing the piston (20) to move under gravity to a second position to allow the support (14) to move to a second orientation;
wherein the support (14) is moved to the first orientation for sunrise and the piston (20) is released to allow the support (14) to move gradually over time to the second orientation for sunset;
wherein the piston (20) is mounted in a cylinder (22), and the driving the piston (20) to the first position comprises pumping a drive fluid to the cylinder (22) to drive the piston (20) to the first position;
wherein the releasing the piston (20) comprises opening an outlet valve (29) of the cylinder (22) to allow drive fluid to escape from the cylinder (22) to release the piston (20) to move under gravity to the second position to allow the support (14) to move to the second orientation;
**characterized in that** the support (14) comprises at least one fluid outlet (40) which is in fluid communication with the outlet valve (29) of the cylinder (22) such that fluid escaping from the cylinder (22) passes out of the fluid outlet (40) and over a solar energy device (12) mounted in or on the support (14) in use.

## Patentansprüche

1. Vorrichtung (10) zum Montieren einer Solarenergievorrichtung (12), wobei die Vorrichtung (10) aufweist:
einen Träger (14) an oder in dem eine Solarenergievorrichtung (12) montiert sein kann, wobei der Träger (14) so bewegbar ist, dass er eine Bewegung der Sonne verfolgen kann; und
einen Kolben (20), der mit dem Träger (14) verbunden ist, wobei der Kolben (20) in eine erste Stellung treibbar ist, um den Träger (14) in eine erste Ausrichtung zu bewegen;
wobei die Anordnung derart ist, dass der Kolben (20) freigesetzt werden kann, um sich unter Schwerkraft in eine zweite Stellung zu bewegen, um den Träger (14) in eine zweite Ausrichtung bewegen zu lassen;
wobei der Kolben (20) in einem Zylinder (22) montiert ist, der ausgestaltet ist, um eine Antriebsflüssigkeit aufzunehmen, um den Kolben (20) in die erste Stellung zu treiben; und
wobei der Zylinder (22) ein Auslassventil (29) aufweist, das wahlweise geöffnet und geschlossen werden kann, wobei die Anordnung derart ist, dass ein Öffnen des Auslassventils (29) das Antriebsfluid aus dem Zylinder (22) entweichen lässt, um den Kolben (20) freizusetzen, um sich unter Schwerkraft in die zweite Stellung zu bewegen, um den Träger (14) in die zweite Ausrichtung bewegen zu lassen,
**dadurch gekennzeichnet, dass**
der Träger (14) wenigstens einen Fluidauslass (40) aufweist, der mit dem Auslassventil (29) des Zylinders (22) in Fluidverbindung steht und so ausgestaltet ist, dass im Betrieb aus dem Zylinder (22) entweichendes Fluid aus dem Fluidauslass (40) und über die in oder an dem Träger (14) montierte Solarenergievorrichtung (12) läuft.

2. Vorrichtung (10) nach Anspruch 1, aufweisend eine Pumpe oder einen Kompressor (30), ausgestaltet, um das Antriebsfluid dem Zylinder (22) zu liefern, um den Kolben (20) in die erste Position zu treiben.

3. Verfahren zum Betreiben einer Solarenergievorrichtungs-Montagevorrichtung (10), wobei die Vorrichtung (10) einen Träger (14) aufweist, an oder in dem die Solarenergievorrichtung (12) montiert ist, wobei der Träger (14) so bewegbar ist, dass er eine Bewegung der Sonne verfolgen kann, wobei das Verfahren aufweist:
Treiben eines mit dem Träger (14) verbundenen Kolbens (20) in eine erste Stellung, um den Träger (14) in eine erste Ausrichtung zu bewegen; und
Freisetzen des Kolbens (20), um sich unter Schwerkraft in eine zweite Stellung zu bewegen, um den Träger (14) in eine zweite Ausrichtung bewegen zu lassen;
wobei der Träger (14) zum Sonnenaufgang in die erste Ausrichtung bewegt wird und der Kolben (20) freigesetzt wird, um den Träger (14) im Laufe der Zeit allmählich in die zweite Ausrichtung zum Sonnenuntergang bewegen zu lassen;
wobei der Kolben (20) in einem Zylinder (22) montiert ist und das Treiben des Kolbens (20) in die erste Stellung ein Pumpen eines Antriebsfluids in den Zylinder (22) aufweist, um den Kolben (20) in die erste Stellung zu treiben;
wobei das Freisetzen des Kolbens (20) ein Öffnen eines Auslassventils (29) des Zylinders (22) aufweist, um das Antriebsfluid aus dem Zylinder (22) entweichen zu lassen, um den Kolben (20) freizusetzen, um sich unter Schwerkraft in die zweite Stellung zu bewegen, um den Träger (14) in die zweite Ausrichtung bewegen zu lassen,
**dadurch gekennzeichnet, dass**
der Träger (14) wenigstens einen Fluidauslass (40) aufweist, der mit dem Auslassventil (29) des Zylinders (22) in Fluidverbindung steht, sodass im Betrieb aus dem Zylinder (22) entweichendes Fluid aus dem Fluidauslass (40) und über eine in oder an dem Träger (14) montierte Solarenergievorrichtung (12) läuft.

## Revendications

1. Appareil (10) pour le montage d'un dispositif d'énergie solaire (12), l'appareil (10) comprenant :
un support (14) sur ou dans lequel un dispositif d'énergie solaire (12) peut être monté, le support (14) pouvant se déplacer de façon à pouvoir suivre le mouvement du soleil ; et
un piston (20) relié au support (14), le piston (20) pouvant être entraîné vers une première position pour déplacer le support (14) vers une première orientation ;
l'agencement étant tel que le piston (20) peut être libéré pour se déplacer sous l'effet de la gravité vers une deuxième position pour permettre au support (14) de se déplacer vers une deuxième orientation ;
dans lequel le piston (20) est monté dans un cylindre (22) qui est agencé pour recevoir un fluide d'entraînement pour entraîner le piston (20) vers la première position ; et
dans lequel le cylindre (22) comprend une soupape de sortie (29) qui peut être sélectivement ouverte et fermée, l'agencement étant tel que l'ouverture de la soupape de sortie (29) permet au fluide d'entraînement de s'échapper du cylindre (22) pour libérer le piston (20) pour qu'il se déplace sous l'effet de la gravité vers la deuxième position pour permettre au support (14) de se déplacer vers la deuxième orientation,
**caractérisé en ce que**
le support (14) comprend au moins une sortie de fluide (40) qui est en communication fluidique avec la soupape de sortie (29) du cylindre (22) et agencée de telle sorte que le fluide s'échappant du cylindre (22) passe hors de la sortie de fluide (40) et sur le dispositif d'énergie solaire (12) monté dans ou sur le support (14) lors de l'utilisation.

2. Appareil (10) selon la revendication 1, comprenant une pompe ou un compresseur (30) agencé(e) pour fournir le fluide d'entraînement au cylindre (22) pour entraîner le piston (20) vers la première position.

3. Procédé de fonctionnement d'un appareil de montage de dispositif d'énergie solaire (10), l'appareil (10) comprenant un support (14) sur ou dans lequel le dispositif d'énergie solaire (12) est monté, le support (14) pouvant se déplacer de façon à pouvoir suivre le mouvement du soleil, le procédé consistant à :
entraîner un piston (20) relié au support (14) vers une première position pour déplacer le support (14) vers une première orientation ; et
libérer le piston (20) pour qu'il se déplace sous l'effet de la gravité vers une deuxième position pour permettre au support (14) de se déplacer vers une deuxième orientation ;
dans lequel le support (14) est déplacé vers la première orientation pour le lever du soleil et le piston (20) est libéré pour permettre au support (14) de se déplacer progressivement au cours du temps vers la deuxième orientation pour le coucher du soleil ;
dans lequel le piston (20) est monté dans un cylindre (22), et l'entraînement du piston (20) vers la première position consiste à pomper un fluide d'entraînement vers le cylindre (22) pour entraîner le piston (20) vers la première position ;
dans lequel la libération du piston (20) consiste à ouvrir une soupape de sortie (29) du cylindre (22) pour permettre au fluide d'entraînement de s'échapper du cylindre (22) pour libérer le piston (20) pour qu'il se déplace sous l'effet de la gravité vers la deuxième position pour permettre au support (14) de se déplacer vers la deuxième orientation,
**caractérisé en ce que**
le support (14) comprend au moins une sortie de fluide (40) qui est en communication fluidique avec la soupape de sortie (29) du cylindre (22) de telle sorte que le fluide s'échappant du cylindre (22) passe hors de la sortie de fluide (40) et sur un dispositif d'énergie solaire (12) monté dans ou sur le support (14) lors de l'utilisation.
